# EUROPEAN PATENT SPECIFICATION

(11) **EP 2 591 658 B1**
(45) Date of publication and mention of the grant of the patent: **20.08.2014**
(21) Application number: 11250892.4
(22) Date of filing: 09.11.2011
(51) Int. Cl.: A01D 34/416

(54) **Variable cutting height trimmer head**
Trimmerkopf mit variabler Schneidhöhe
Tête de tondeuse à hauteur de coupe variable

(43) Date of publication of application: 15.05.2013
(73) Proprietor: Techtronic Outdoor Products Technology Limited, Hamilton HM12 (BM)
(72) Inventor: Colber, William, Lavonia, GA 30553 (US); Ferrell, James, Elberton, GA 30635 (US); Montgomery, Benjamin, Anderson, SC 29625 (US)
(74) Representative: Stevenson-Hill, Jack Patrick

(56) References cited:
- EP-A1- 1 101 396
- EP-A1- 1 338 185
- DE-A1-102005 049 767
- DE-U1- 20 014 973
- US-A- 4 077 190
- US-A- 4 905 465
- US-A1- 2001 023 542
- US-A1- 2006 191 143
- US-B1- 6 298 642

## Description

### FIELD

The present invention relates to landscape trimmers and, more particularly, to string heads for landscape trimmers.

### SUMMARY

Generally, landscape trimmers are used to cut grass, weeds, etc. and are often used to edge around trees, near fences and walls, along landscape borders, etc. Conventional landscape trimmers have an elongated shaft with a rotating element or gear head near the end of the elongated shaft, and a spool or string head is attached to the gear head. Typically, the string head includes a monofilament line or other cutting devices that are rotated by the gear head for cutting and trimming along landscaped areas, fences, walls, etc.

US2001/0023542 relates to a string trimmer head, according to the abstract of which the string trimmer head is provided for receiving and retaining separate lengths of string supplied from outside the head. String lengths passing through openings in the periphery of the head are held by clamping members provided within the head. The clamping members are selectively opened by activation of respective slidable members provided on the upper surface of the head in order to release short lengths of previously supplied string and/or to permit the receipt of new string length. On release of the slidable members, the respective clamping members move towards one another for clamping purposes under the influence of springs.

A trimmer head in accordance with the preamble of claim 1 is known from EP-A1-101 396.

In one embodiment, a trimmer head is provided for use with a trimmer.

The trimmer heads includes a body rotatable about an axis, the body defining a plurality of axially spaced channels each sized to receive at least a portion of a trimmer line therein, and a clamping mechanism in operable communication with at least two of the axially spaced channels to selectively retain a trimmer line positioned within any one of the at least two axially spaced channels.

The clamping mechanism may include a first pawl and a second pawl, each pawl being movable into and out of engagement with a trimmer line. Each pawl may be at least partially positioned within at least two of the axially spaced channels.

The plurality of axially spaced channels includes a first set of axially spaced channels and a second set of axially spaced channels circumferentially spaced from the first set of axially spaced channels. In such constructions, the clamping mechanism is a first clamping mechanism in operable communication with each channel in the first set of axially spaced channels to selectively retain a trimmer line positioned within any one channel in the first set of axially spaced channels. The trimmer head may further include a second clamping mechanism in operable communication with each channel in the second set of axially spaced channels to selectively retain a trimmer line positioned within any one channel in the second set of axially spaced channels.

The first set of axially spaced channels may be positioned diametrically opposite the second set of axially spaced channels. The channels of the first set of axially spaced channels are axially aligned. Each channel may include a first opening and a second opening opposite the first opening. The trimmer head may further include a wear disk pivotally coupled to the body.

The clamping mechanism may include a clamping member operable to apply a clamping force to a trimmer line in one of at least two of the axially spaced channels, and a release button operable to move the clamping member from a clamping position, in which the clamping member applies a clamping force to the trimmer line, toward a release position, in which the clamping force is reduced, the release button being arranged on the body to provide additional clamping force when the trimmer head rotates about the axis.

A trimmer head may generally include a body rotatable about an axis, the body defining one or more channels sized to receive a trimmer line therein, a clamping mechanism in operable communication with at least one of the one or more channels to selectively retain a trimmer line within the at least one of the one or more channels, and a wear disk rotatably coupled to the body.

The body may include an axial body projection, and the wear disk may have an outer surface and include an axial disk projection. The wear disk may be coupled to the body with the disk projection radially surrounding the body projection. The trimmer head may further include a bearing arrangement between the body projection and the disk projection.

In an embodiment, a trimmer head generally includes a body rotatable about an axis, the body defining one or more channels sized to receive at least a portion of a trimmer line therein, and a clamping mechanism in operable communication with at least one of the one or more channels to selectively retain a trimmer line in the at least one of the one or more channels. The clamping mechanism may include a clamping member operable to apply a clamping force to a trimmer line in the at least one of the one or more channels, and a release button operable to move the clamping member from a clamping position, in which the clamping member applies a clamping force to the trimmer line, toward a release position, in which the clamping force is reduced, the release button being arranged on the body to provide additional clamping force when the trimmer head rotates about the axis.

The one or more channels may include a plurality of axially spaced channels, and the clamping mechanism may be in operable communication with at least two of the plurality of axially spaced channels to selectively retain a trimmer line positioned within any one of the at least two of the plurality of axially spaced channels.

The plurality of axially spaced channels include a first set of axially spaced channels and a second set of axially spaced channels circumferentially spaced from the first set of axially spaced channels, and the clamping mechanism is a first clamping mechanism in operable communication with each channel in the first set of axially spaced channels to selectively retain a trimmer line positioned within any one channel in the first set of axially spaced channels.

The trimmer head may further include a second clamping mechanism in operable communication with each channel in the second set of axially spaced channels to selectively retain a trimmer line positioned within any one channel in the second set of axially spaced channels. The second clamping mechanism may include a second clamping member operable to apply a clamping force to a trimmer line within any one channel in the second set of axially spaced channels, and a second release button operable to move the second clamping member from a clamping position, in which the clamping member applies a clamping force to the trimmer line, toward a release position, in which the clamping force is reduced, the second release button being arranged on the body to provide additional clamping force when the trimmer head rotates about the axis.

In a further embodiment, a trimmer may generally include a frame, a motor supported by the frame and operable to rotatably drive a drive shaft, and a trimmer head supportable on the drive shaft for rotation with the drive shaft. The trimmer head may include a body rotatable about an axis, the body defining a plurality of axially spaced channels each sized to receive at least a portion of a trimmer line therein, and a clamping mechanism in operable communication with at least two of the axially spaced channels. The clamping mechanism may include a clamping member operable to apply a clamping force to a trimmer line in one of at least two of the axially spaced channels, and a release button operable to move the clamping member from a clamping position, in which the clamping member applies a clamping force to the trimmer line, toward a release position, in which the clamping force is reduced.

The trimmer head may further include a wear disk pivotally coupled to the body. The release button may be arranged on the body to provide additional clamping force when the trimmer head rotates about the axis.

### BRIEF DESCRIPTION OF THE DRAWINGS

Fig. 1 is a perspective view of a trimmer for use with a trimmer head.
Fig. 2 is a perspective view of a trimmer head.
Fig. 3 is a front view of the trimmer head shown in Fig. 2.
Fig. 4 is a side view of the trimmer head shown in Fig. 2.
Fig. 5 is a top view of the trimmer head shown in Fig. 2.
Fig. 5A is a transparent top view of the trimmer head and illustrating a trimmer line positioned within a channel.
Fig. 6 is an assembly view of the trimmer head shown in Fig. 2.
Fig. 7 is a cross-sectional view taken generally along line 7—7 in Fig. 5.
Fig. 8 is a detailed view of the channels illustrated in Fig. 7.
Fig. 9 is a bottom perspective view of the top plate of the trimmer head.
Fig. 10 is a top view of the top plate shown in Fig. 9.
Fig. 11 is a bottom view of the top plate shown in Fig. 9.
Fig. 12 is a cross-sectional view taken generally along line 12—12 in Fig. 10.
Fig. 13 is a perspective view of the bottom plate of the trimmer head.
Fig. 14 is a cross-sectional view taken generally along line 14-14 in Fig. 13.
Fig. 15 is a perspective view of the interior body portion of the trimmer head.
Fig. 16 is a rear perspective view of the interior body portion shown in Fig. 15.
Fig. 17 is a perspective view of the exterior body portion of the trimmer head.
Fig. 18 is a rear perspective view of the exterior body portion shown in Fig. 17.
Fig. 19 is a top view of the exterior body portion shown in Fig. 17.
Fig. 20 is a cross-sectional view taken generally along line 20-20 in Fig. 4.
Fig. 21 is a perspective view of the clamping mechanism of the trimmer head.
Fig. 22 is a cross-sectional view taken generally along line 22-22 in Fig. 4.
Fig. 23 is a cross-sectional view taken generally along line 23-23 in Fig. 4.

### DETAILED DESCRIPTION

Before any independent embodiments of the invention are explained in detail, it is to be understood that the invention is not limited in its application to the details of construction and the arrangement of components set forth in the following description or illustrated in the following drawings. The invention is capable of other independent embodiments and of being practiced or of being carried out in various ways. Also, it is to be understood that the phraseology and terminology used herein is for the purpose of description and should not be regarded as limiting.

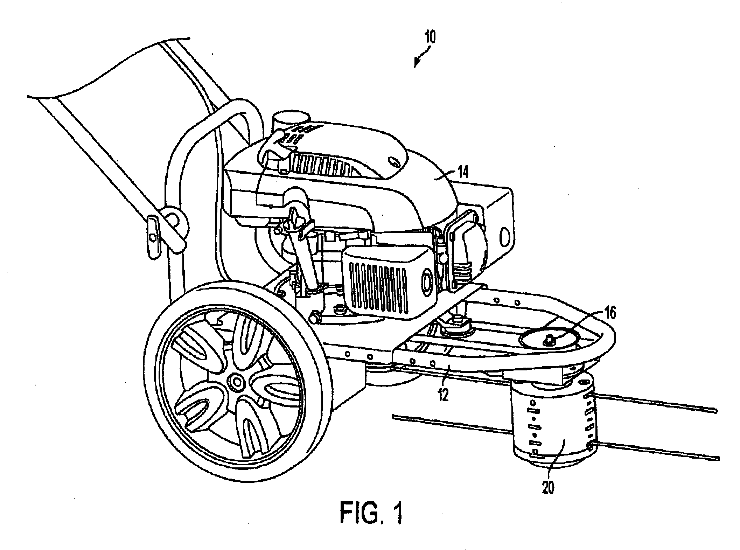

Fig. 1 illustrates a trimmer 10 (e.g., a weed and grass trimmer) including a frame 12 supported for movement over ground and a motor 14 supported by the frame 12. The motor 14 is operable to rotate a drive shaft 16. A trimmer head is supported and rotatably driven by the drive shaft 16.

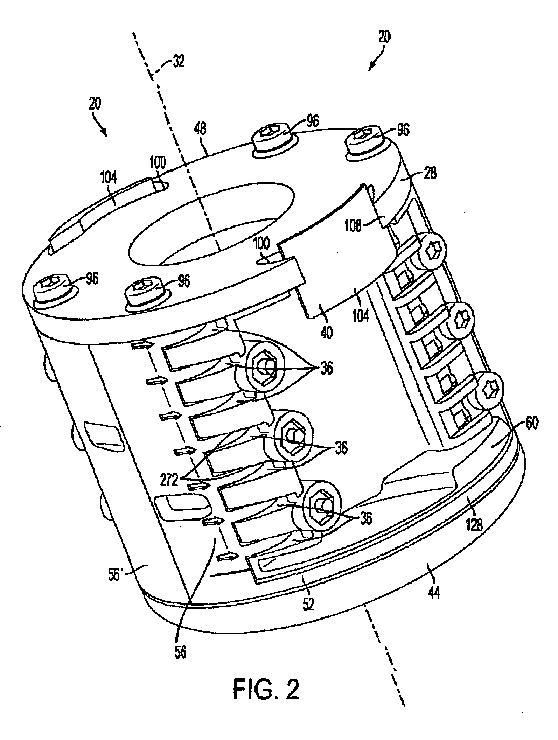

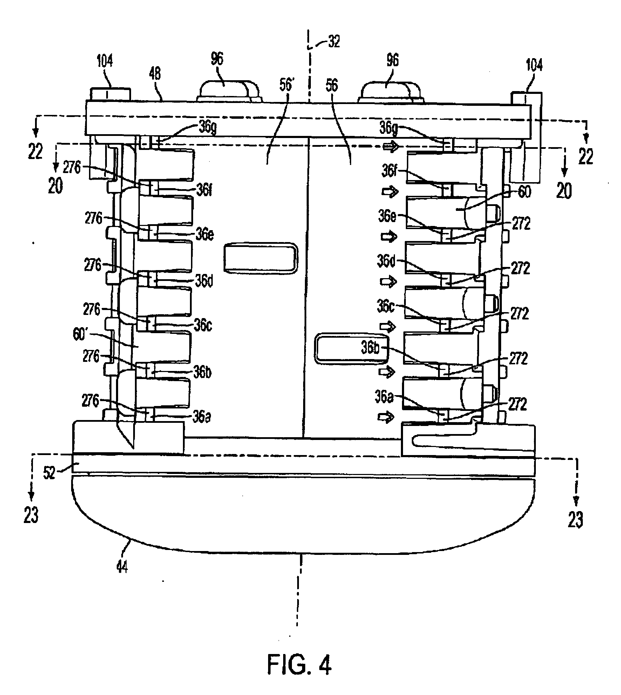

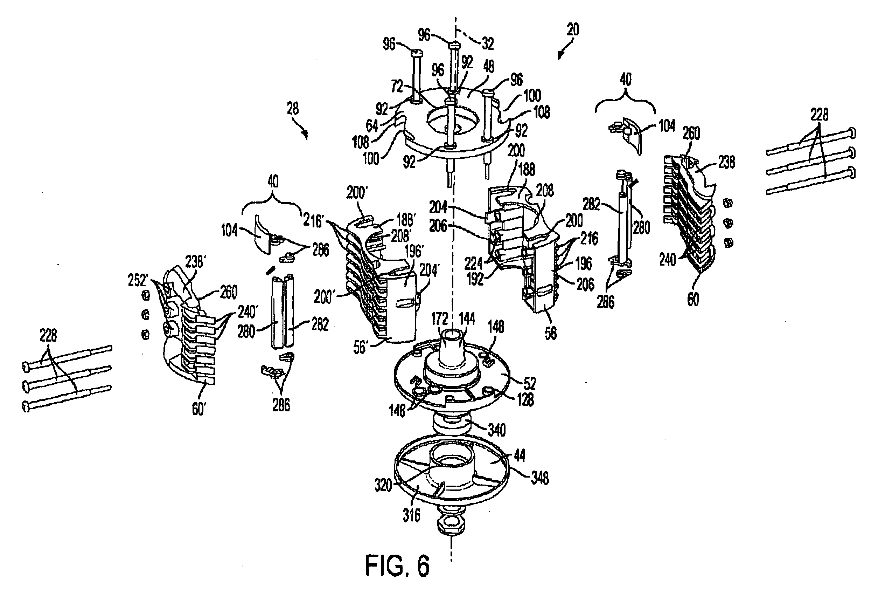

Figs. 2-7 illustrate a variable cutting height trimmer head 20 configured to be used with the trimmer 10. The trimmer head 20 is couplable to and rotatable with the drive shaft 16 (generally at high speeds) such that any trimmer line(s) 24 extending from the trimmer head 20 will generally cut the vegetation it contacts. The trimmer head 20 generally includes a body 28 defining an axis 32 and a plurality of axially spaced channels 36*a*, 36*b*...36*n*, each configured to receive at least a portion of a length of trimmer line 24. In the illustrated construction, the trimmer head 20 includes one or more clamping mechanisms 40 each substantially positioned within the body 28 and associated with at least some of the channels 36. A mow-ball or wear disk 44 is pivotably coupled to the body 28.

As described below, in some independent aspects, the body 28 of the trimmer head 20 includes axially-extending members (e.g., body portions 56, 56' and 60, 60') cooperating to define multiple axially-spaced apart channels 36. Also, in some independent aspects, one clamping mechanism 40 is operable to retain a trimmer line 24 in more than one axially-spaced apart channel 36. In addition, in some independent aspects, the wear disk 44 is pivotable relative to the body 28 to, for example, reduce wear.

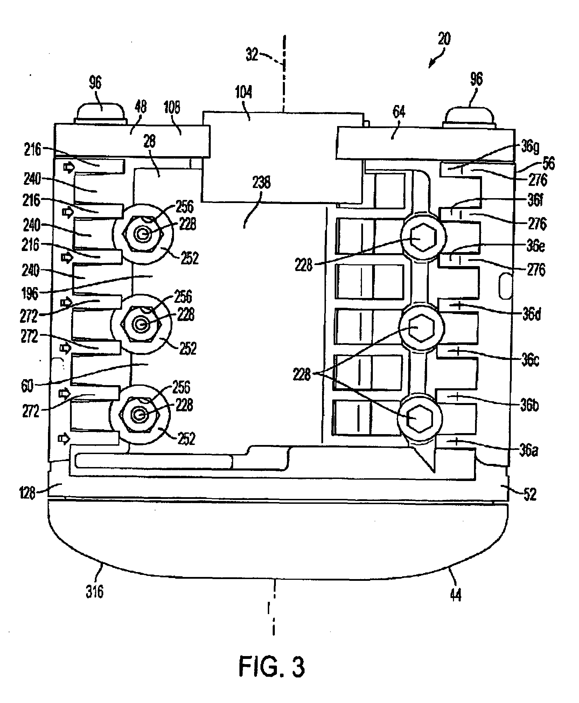

In the illustrated construction, the trimmer head 20 is configured to receive one or more trimmer lines 24 at least partially within one of the channels 36and retained by a clamping mechanism 40. The user can adjust the height at which the trimmer line(s) 24 will engage the vegetation (e.g., the cutting height), by selecting the channel 36 at the desired height into which to insert each trimmer line 24. For example, positioning the trimmer line 24 in (see Figs. 3-4) a channel 36*a* proximate the wear plate 44 will cut the vegetation shorter than if the trimmer line 24 were positioned in a channel *36g* further away from the wear plate 44 (e.g., proximate the top plate 48).

As shown in Figs. 2-4 and 6-7, the body 28 of the trimmer head 20 generally includes a top plate 48, a bottom plate 52 axially spaced from the top plate 48, first and second interior body portions 56, 56' spanning between the top plate 48 and the bottom plate 52, and first and second exterior body portions 60, 60'. The outer body portions 60, 60' are coupled to the interior body portions 56, 56', respectively, to at least partially define the plurality of axially spaced channels 36 therebetween.

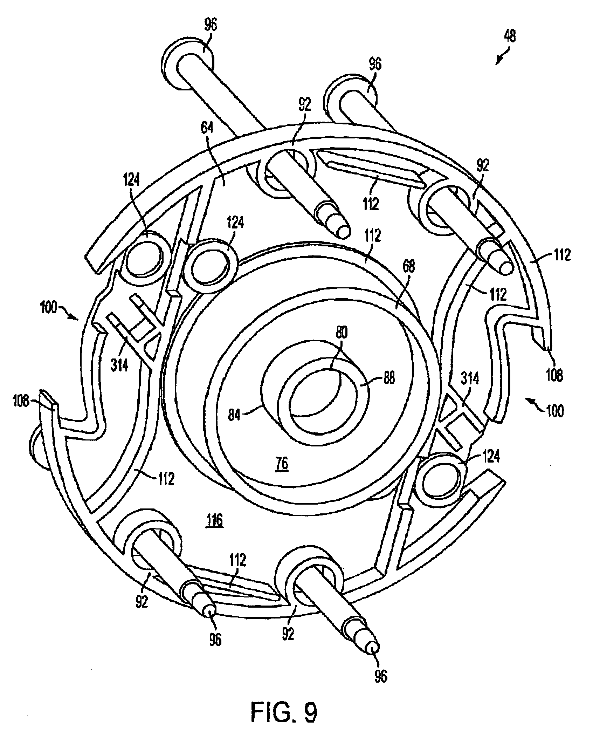

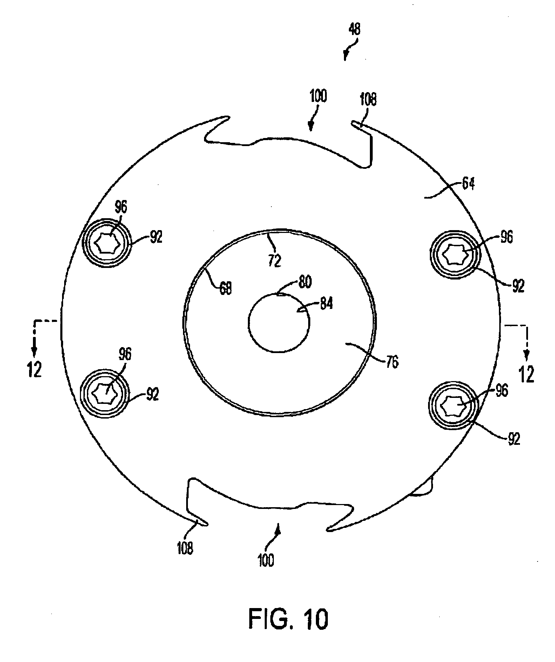

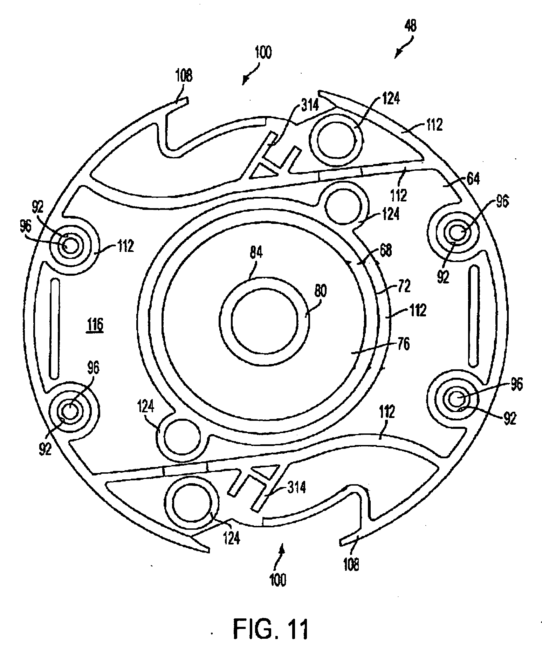

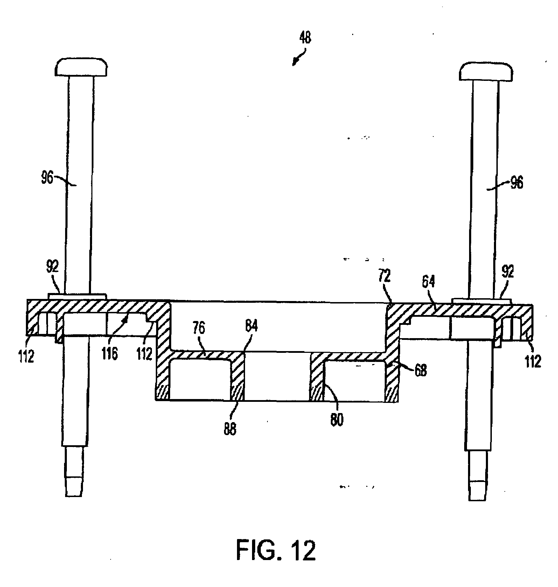

As shown in Figs. 9-12, the top plate 48 is substantially flange-shaped and includes a substantially annular flange portion 64 and a cylindrical portion 68 extending axially from the inner diameter 72 of the flange portion 64. Inside the cylindrical portion 68, an inner annular wall 76 extends radially inwardly and terminates in a generally cylindrical sleeve 80 that extends axially from an inner edge 84 of the inner annular wall 76. The inner annular wall 76 is positioned substantially mid-way between opposite ends of the cylindrical portion 68, and a distal end 88 of the sleeve 80 is substantially axially aligned with a distal end of the cylindrical portion 68.

The flange portion 64 defines four apertures 92 for receiving a first set of fasteners 96 to be threadably received by the bottom plate 52. It should be understood that there could be more or fewer apertures 92 and associated fasteners 96, depending upon the particular construction. When the trimmer head 20 is assembled, the apertures 92 align with retention bosses 148 of the bottom plate 52 (described below) such that the fasteners 96 extend through the apertures 92, through fastener channels 200, 200' of the interior body portions 56, 56', and into the retention bosses 148, thereby securing the top plate 48, the interior body portions 56, 56', and the bottom plate 52 to one another.

As shown in Figs. 9-11, diametrically opposed notches 100 are defined along the outer perimeter of the flange portion 64. The notches 100 are arcuately-shaped and configured to receive a line release button 104 from a respective one of the clamping mechanisms 40. The notches 100 are sized to allow the release button 104 to move (e.g., pivot) between an engaged position and a release position without having any portion of the button 104 extend excessively from the notch 100 and beyond the outer perimeter of the flange portion 64. In the illustrated construction, the flange portion 64 also includes a retention tab 108 extending into the notch 100 to limit outward movement of the release button 104 and to retain the release button 104 within the notch 100. When the trimmer head 20 rotates at operational speeds, centrifugal forces exerted upon the release button 104 could potentially deform and/or over-rotate the button 104 if the button 104 was not properly retained.

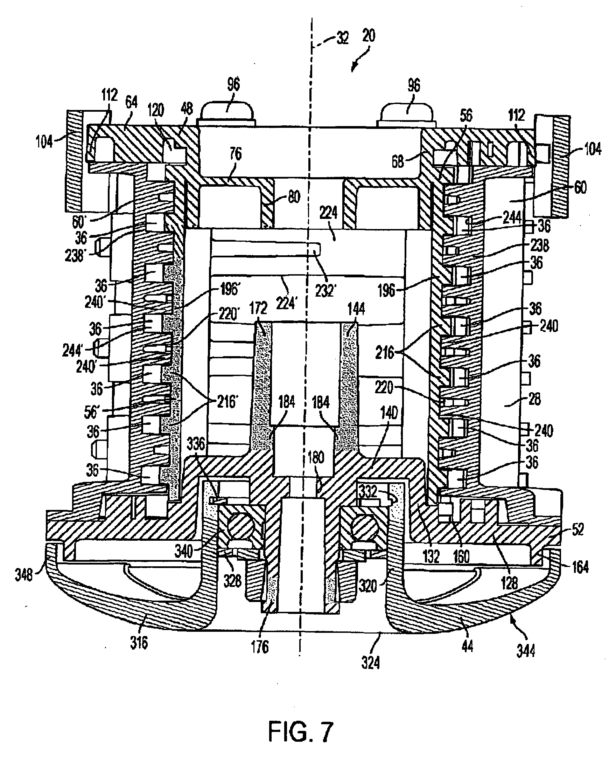

As shown in Figs. 9 and 11-12, a plurality of ribs 112 extend axially downwardly from the bottom surface 116 of the flange portion 64 at various locations to, for example, provide rigidity to the top plate 48. The illustrated ribs 112 also act as spacers, positioning the top walls 188, 188' (described below) of the interior body portions 56, 56' a distance from the flange portion 64 to provide a volume 120 therebetween (see Fig. 7). In the illustrated construction, the ribs 112 extend at least partially along the perimeter of the flange portion 64 and along at least a portion of the perimeter of the cylindrical portion 68. In addition, the ribs 112 encompass the apertures 92 to produce bosses. A pair of ribs 112 extends curvilinearly along the flange portion 64 to at least partially define a pair of channels 36. In other constructions, a different number of ribs 112 may be included depending upon, for example, the structural requirements of the top plate 48.

As shown in Figs. 9-11, a plurality of pivot bosses 124 on the flange portion 64 are configured to pivotably receive at least a portion of the clamping mechanism 40 (e.g., an end cap 286). The pivot bosses 124 are typically found in pairs, each pivot boss 124 corresponding to a pawl 280, 282 (described below) of the clamping mechanism 40. In the illustrated construction, each boss 124 generally includes an annular ring extending axially from the flange portion 64. The ring allows the pawls 280, 282 to rotate with respect to the top plate 48 while restricting any radial movement of the pawls 280, 282. In other constructions, each pivot boss 124 may have a different shape (e.g., may not be ring-like) but could instead include, a recess, post, hinge, etc.

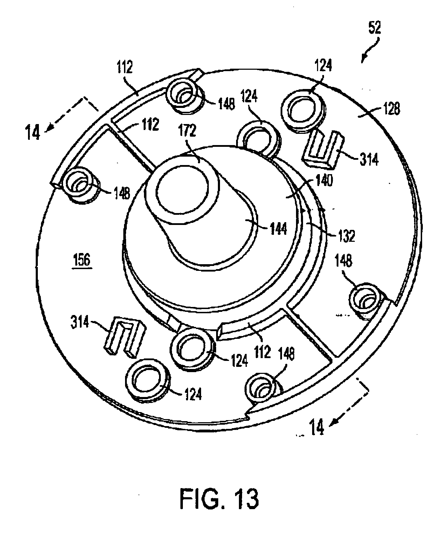

As shown in Figs. 13-14, the bottom plate 52 is substantially flange-shaped and includes a substantially annular flange portion 128 and a cylindrical portion 132 extending axially from the inner diameter 136 of the flange portion 128. The bottom plate 52 also includes an inner annular wall 140 extending radially inwardly from the distal end of the cylindrical portion 132 to terminate in a generally cylindrical core 144.

The flange portion 128 includes (see Fig. 13) four retention bosses 148, each axially aligned and substantially corresponding with an aperture 92 of the top plate 48, when assembled. The retention bosses 148 threadably receive the distal ends of the fasteners 96 inserted into the apertures 92 of the top plate 48. It should be understood that there could be more or fewer retention bosses 148 depending upon the number of apertures 92 in the top plate 48 and associated fasteners 96. In the illustrated construction, the retention bosses 148 include threaded through holes, although in other constructions, each retention boss 148 may be replaced by an aperture and an external fastening device (e.g., a nut).

As shown in Figs. 13-14, a plurality of ribs 112 extend axially from the top surface 156 of the flange portion 128 at various locations to, for example, provide rigidity to the bottom plate 52. The illustrated ribs 112 also act as spacers, positioning the bottom wall 192 (described below) of the interior body portions 56, 56' a distance from the flange portion 128 to provide a volume 160 therebetween (see Fig. 7). In the illustrated construction, the ribs 112 extends at least partially along the outer perimeter of the flange portion 128 and along at least a portion of the perimeter of the cylindrical portion 132. In addition, some ribs 112 may extend radially from the cylindrical portion 132. In other constructions, a different number of ribs 112 may be included depending upon, for example, the structural requirements of the bottom plate 52.

The flange portion 128 also includes a plurality of pivot bosses 124, each axially aligned and substantially corresponding with a pivot boss 124 of the top plate 48. As described above, each pivot boss 124 is configured to pivotably receive at least a portion of a pawl 280, 282 of a corresponding clamping mechanism 40.

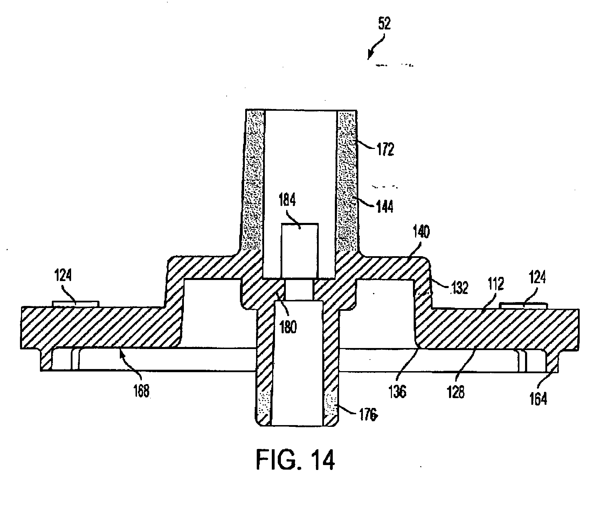

As shown in Fig. 14, an annular wall 164 extends axially from the bottom surface 168 of the flange portion 128. The annular wall 164 is substantially co-axial with and spaced a distance radially inwardly from the perimeter of the flange portion 128. The illustrated annular wall 164 acts as a guide for the wear plate 44 as the wear plate 44 rotates with respect to the body 28. The annular wall 164 helps maintain the wear plate 44 in the correct position should the wear plate 44 experience a particularly large radial load.

The cylindrical core 144 includes a first portion 172 with first inner and outer diameters, and a second portion 176 extending axially from the first portion 172 and with second inner and outer diameters smaller than the first inner and outer diameters. Furthermore, the cylindrical core 144 includes a radially inwardly extending protrusion 180 to separate the first portion 172 from the second portion 176. In some constructions, the outer surface of the second portion 176 may be partially threaded to receive a nut or other fastening device thereupon.

The cylindrical core 144 also includes a plurality of flats 184 extending radially inwardly from the bore of the first portion 172. The flats 184 generally correspond to a pair of recesses (not shown) defined by the drive shaft (not shown but similar to the drive shaft 16), such that when the drive shaft is inserted into the trimmer head 20 and, ultimately, into the bore of the first portion 172, any rotational torque provided by the drive shaft will be transmitted to the trimmer head 20, causing the drive shaft and the trimmer head 20 to rotate together. Although the illustrated construction may include one or more flats 184, in other constructions, the inner bore of the first portion 172 may include, in place of and/or in addition to the flat(s) 184, axial ribs, threads, recesses, locking pins, etc., to permit the drive shaft to transfer rotational torque to the trimmer head 20.

The interior body portions 56, 56' are substantially the same, and only the first interior body portion 56 is described in detail. Common elements of the second interior body portion 56' are identified by the same reference number ""'. While the illustrated trimmer head 20 includes two interior body portions 56, 56', in other constructions the trimmer head 20 may include more than two interior body portions. In yet other constructions, the trimmer head 20 may include only one interior body portion.

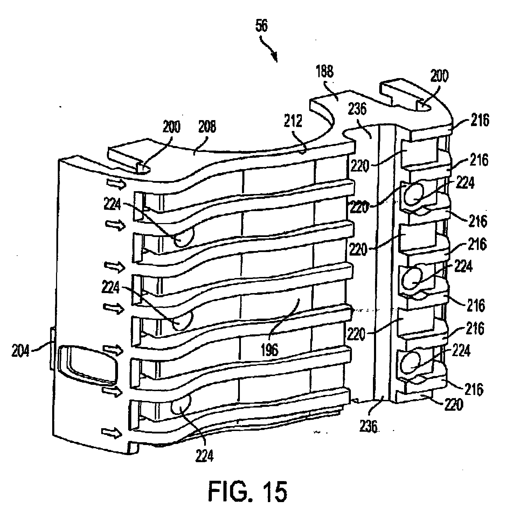

As shown in Figs. 15-16, the first interior body portion 56 is substantially semicylindrical and includes a top wall 188, a bottom wall 192 axially spaced from the top wall 188, and a vertical wall 196 extending between the top and bottom walls 188, 192. The first interior body portion 56 defines a pair of fastener channels 200 extending axially through the first interior body portion 56 and aligning with the apertures 92 of the top plate 48 and the retention bosses 148 of the bottom plate 52, when assembled. As described above, the fastener channels 200 receive a portion of the fasteners 96 extending from the top plate 48 to the bottom plate 52 to couple the interior body portions 56, 56' with the top and bottom plates 48, 52.

A plurality of alignment tabs 204 and recesses 206 along the periphery of the first interior body portion 56. When the first interior body portion 56 is coupled with the second interior body portion 56', each alignment tab 204 of the first interior body portion 56 aligns with and is received by a corresponding recess 206' of the second interior body portion 56', and vice versa. The alignment tabs 204 and recesses 206 align the first and second interior body portions 56, 56' during assembly of the trimmer head 20 and add rigidity to the body 28.

The top and bottom walls 188, 192 are substantially semi-circular and include a semi-circular recess 208 corresponding to the cylindrical portions 68, 132 of the top and bottom plates 48, 52, respectively. The top and bottom walls 188, 192 also include a curvilinear exterior edge 212 that at least partially defines the contour of the vertical wall 196.

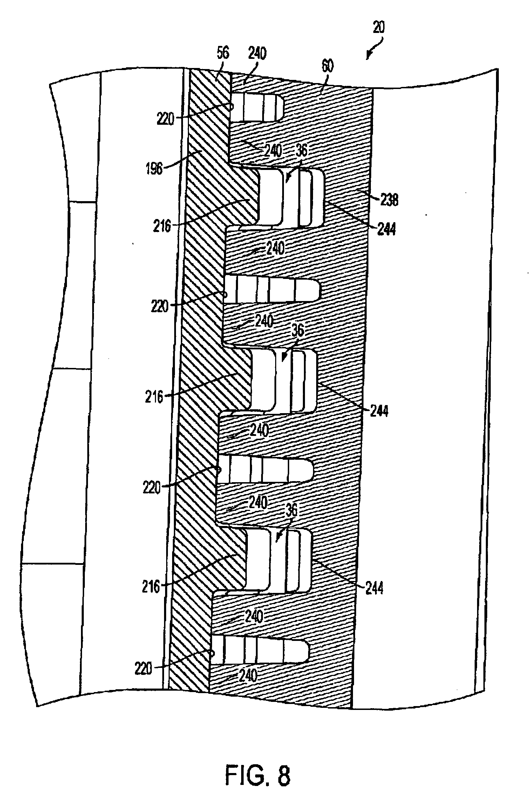

The vertical wall 196 includes a plurality of ridges 216 extending generally horizontally along a portion of the wall. Each ridge 216 is substantially parallel to and equally spaced from the adjacent ridges 216 to form a plurality of valleys or recesses 220 therebetween. The ridges 216, and the resulting valleys 220, are sized and spaced to mesh with a corresponding plurality of ridges 240 formed by the exterior body portion 60 (described below) to define the channels 36 (see Figs. 7-8). In the illustrated construction, each ridge 216 is substantially similar and defines a generally wavy contour. In other constructions, each ridge 216 may have a different shape and/or define a unique contour.

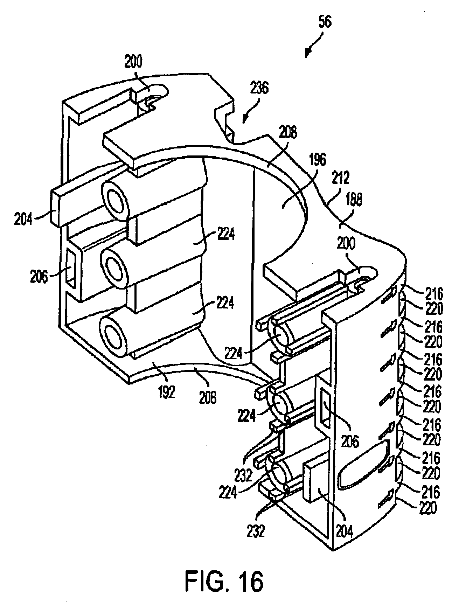

The vertical wall 196 defines (see Fig. 16) a plurality of guide sleeves 224 (e.g., four) extending generally normal from the vertical wall 196 to allow a second set of fasteners 228 to pass therethrough. It should be understood that there could be more or fewer guide sleeves 224 and associated fasteners 228 depending upon the particular construction. When the body 28 of the trimmer head 20 is assembled, each guide sleeve 224 aligns with a corresponding guide sleeve 224' of the second inner body portion 56', a corresponding fastener boss 252, 252' of one of the first and second outer body portions 60, 60', and a corresponding aperture 248, 248' of the other of the first and second outer body portions 60, 60'. In the illustrated construction, a fastener 228 is introduced into an aperture 248 of the first outer body portion 60, fed through the guide sleeves 228, 228' of the inner body portions 56, 56', and retained within the fastener boss 252' of the second outer body portion 60', or vice versa. As such, the fasteners 228 secure the first and second outer body portions 60, 60' to the first and second inner body portions 56, 56', respectively. In the illustrated construction, some guide sleeves include a plurality ofprojections 232 (e.g., four) to align the guide sleeves 224 of the first interior body portion 56 with a corresponding guide sleeve 224' of the second inner body portion 56'.

As shown in Fig. 15, the vertical wall 196 also defines a groove 236 extending axially along the height of the inner body member 56. The groove 236 projects inwardly from the vertical wall 196 and intersects at least some of the ridges 216. The groove 236 is configured to at least partially receive a pawl 282 of the clamping mechanism 40 and will be described in greater detail below.

The first and second exterior body portions 60, 60' are substantially the same, and only the first exterior body portion 60 is described in detail. Common elements of the second interior body portion 60' are identified by the same reference number "'". While the illustrated trimmer head 20 includes two exterior body portions 60, 60' (one corresponding to each interior body portion 56, 56') in other constructions the trimmer head 20 may include more than two exterior body portions.

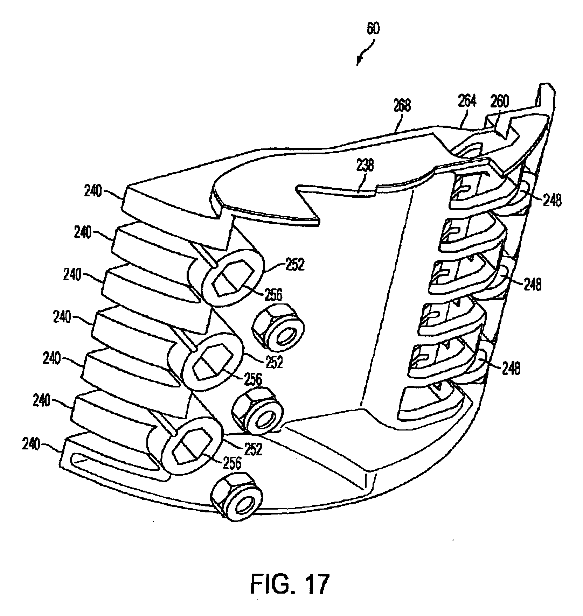

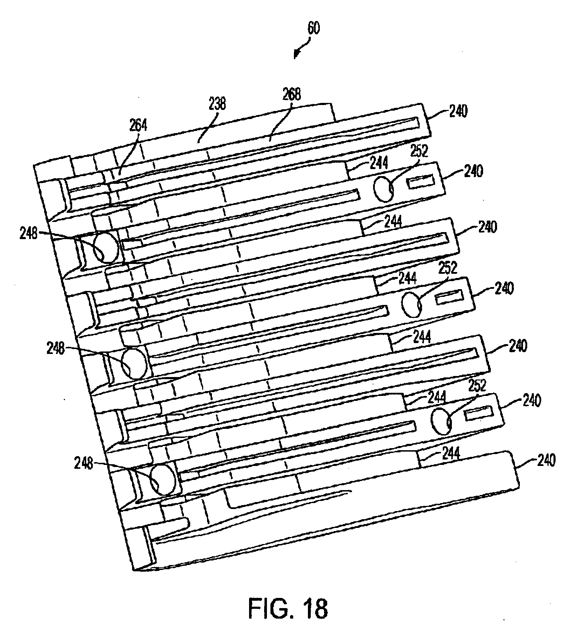

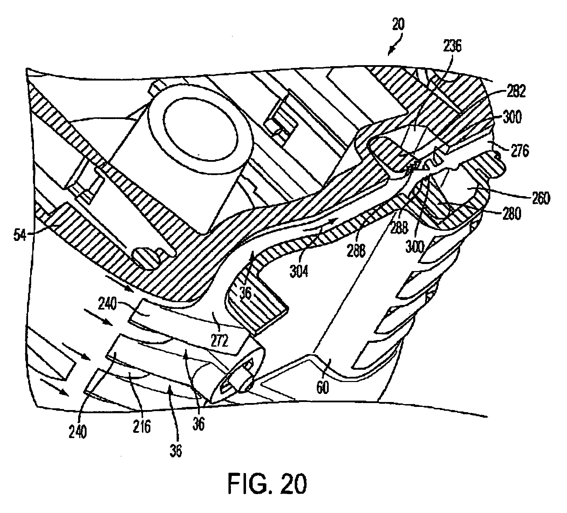

As shown in Figs. 17-19, the first exterior body portion 60 is substantially arc-shaped and includes a wall 238 having a plurality of equally spaced ridges 240 extending generally horizontally along a portion of the exterior body portion 60. Each ridge 240 is substantially parallel to and equally spaced from adjacent ridges 240 to form a plurality of valleys or recesses 244 therebetween. As described above, when the first exterior body portion 60 is coupled to the first interior body portion 56, the ridges 240, and the resulting recesses 244, mesh with the ridges 216 of the inner body portion 56 to provide the channels 36 therebetween (see Figs. 7-8). Furthermore, the contour of the ridges 240 and recesses 244 of the first exterior body portion 60 substantially correspond with the contour of the ridges 216 and vertical wall 196 of the first inner body portion 56 such that no gaps or voids are present along the length of each channel 36 (see Fig. 20). This construction inhibits binding or jamming of the trimmer line 24 while it is fed into a respective channel 36.

The first exterior body portion 60 defines a plurality of apertures 248 to receive a second set of fasteners 228 to be retained by the fastener bosses 252' of the second exterior body portions 60'. When the trimmer head 20 is assembled, the apertures 248 align with at least some of the fastener channels 200, 200' of the inner body portions 56, 56' and the fastener bosses 252' of the second exterior body portion 60' such that the fasteners 228 extend through the apertures 248, through the fastener channels 200, 200', and are retained within the fastener boss 252' of the second exterior body portion 60'. Thus, the fasteners 228 couple the first and second outer body portions 60, 60' to the first and second inner body portions 56, 56', respectively.

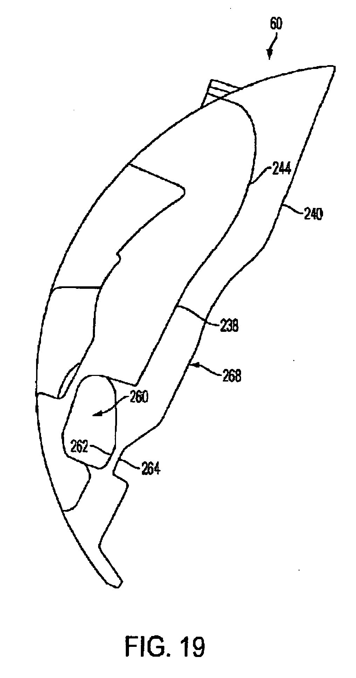

The first exterior body portion 60 also defines (see Figs. 17-18) a plurality of fastener bosses 252 to retain any fasteners 228 introduced into the apertures 248 of the second exterior body portion 60'. When the trimmer head 20 is assembled, the fastener bosses 252 align with at least some of the fastener channels 200, 200' of the interior body portions 56, 56' and the apertures 248' of the second exterior body portion 60'. The fastener bosses 252 generally form hexagonal recesses 256, into which a nut (see Fig. 19) or other fastening device may be inserted and subsequently restricted from rotating with respect to the body 28. In other constructions, the bores of the fastener bosses 252 may be threaded such that no separate fasteners are required or be generally cylindrically shaped and sized so as to accept a self-threading fastener.

As shown in Figs. 17 and 19, an axial channel 260 of the body portion 60 at least partially receives a pawl 280 of the clamping mechanism 40. The axial channel 260 generally extends the axial height of the exterior body portion 60 and is in communication with at least some of the axially spaced channels 36 (see Fig. 20). The axial channel 260 is sized to allow the pawl 282 to rotate between the engaged position and the disengaged position and has a cutout 262 extending into the channels 36 to allow the pawl 280 to engage the trimmer line 24 in the engaged position.

As shown in Figs. 17-19, a notch 264 is defined along an inner face 268 of the body portion 60 opposite the axial channel 260. When the first interior body portion 56 is coupled with the first exterior body portion 60, the notch 264 aligns with the groove 236 of the interior body portion 56 to form a channel in communication with at least some of the axially spaced channels 36 and substantially similar to the axial channel 260. The notch 264 extends into the channels 36, in a manner similar to the cutout 262, to allow the pawl 282 to engage the trimmer line 24 in the engaged position (see Fig. 20).

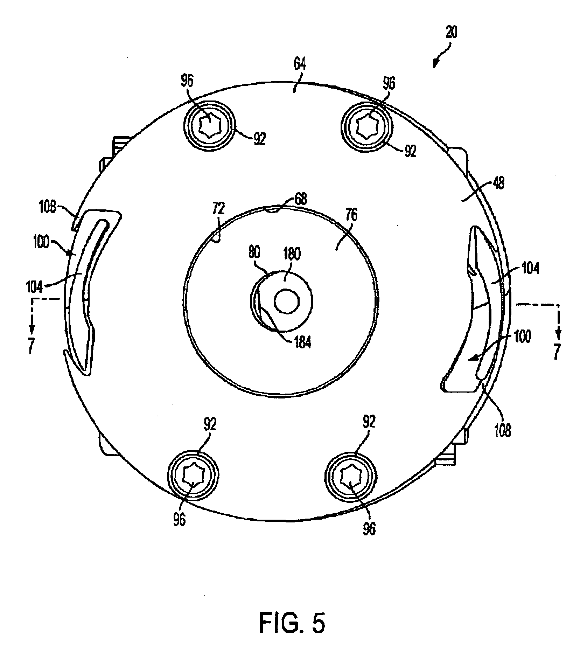

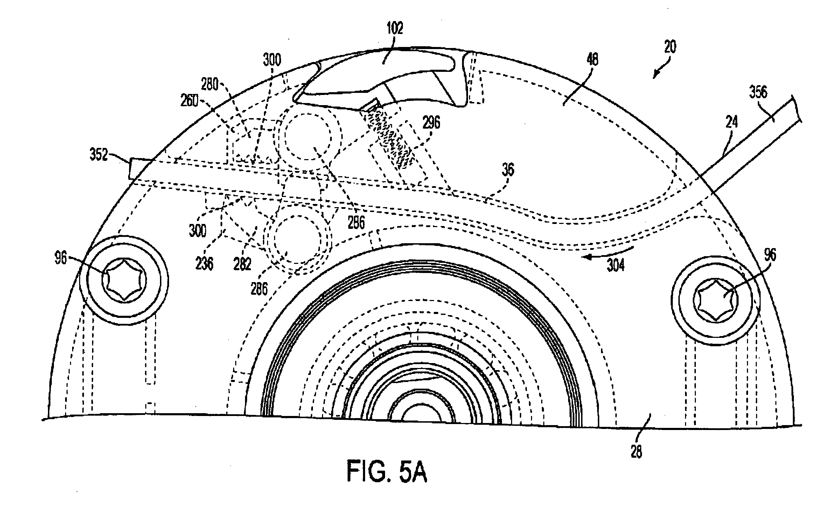

As shown in Fig. 20, the plurality of axially spaced channels 36 are defined between the first inner and first outer body portions 56, 60 and (see Fig. 7) between the second inner and second outer body portions 56', 60'. Each channel 36 extends curvilinearly through the body 28 and generally has a substantially constant cross-sectional shape. In the illustrated construction, each channel 36 is open on both ends, producing a first aperture 272 and a second aperture 276 opposite the first aperture 272, such that a length of trimmer line 24 may pass entirely therethrough (see Fig. 5A). In the illustrated construction, each channel 36 is substantially similar. In other constructions, each channel 36 may be unique in size and/or contour. In yet other constructions, each channel 36 may be sized to receive a particular gauge of trimmer line 24.

As shown in Figs. 5A, 6 and 21-23, the trimmer head 20 includes one or more clamping mechanisms 40, each associated with at least some of the channels 36 to retain a length of trimmer line 24 therein. In the illustrated construction, the trimmer head 20 includes two clamping mechanisms 40. One clamping mechanism 40 is associated with each channel 36 defined between the first interior and first exterior body portions 56, 60 (e.g., a first bank or set of channels 36), and another clamping mechanism 40 is associated with each channel 36 defined between the second interior and second exterior body portions 56', 60' (e.g., a second bank or set of channels 36). In other constructions, more than two clamping mechanisms 40 may be provided.

Each clamping mechanism 40 includes first and second pawls 280, 282, each movable into and out of engagement with a trimmer line 24, and a plurality of end caps 286 coupled to the ends of the pawls 280, 282. Each pawl 280, 282 is elongated in shape, includes a ramped surface 288 to engage the trimmer line 24, and defines an axis of rotation 292 therethrough. The pawls 280, 282 are movable (e.g., pivotably) between an engaged position, in which the pawls 280, 282 engage the trimmer line 24 (when positioned within an associated channel 36), and a release position, in which the pawls 280, 282 do not engage (or have reduced engagement with) to allow the movement of the trimmer line 24 in the associated channel(s) 36.

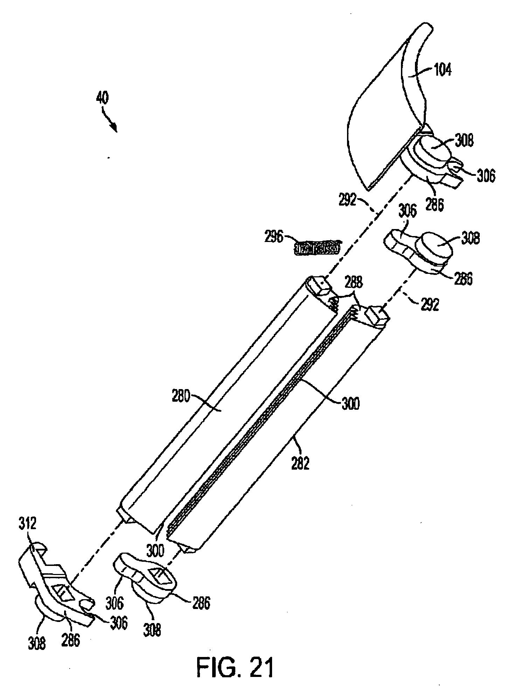

In the illustrated construction, the pawls 280,282 are generally biased toward the engaged position by a biasing member 296 (described below). In some constructions, each pawl 280, 282 includes (see Fig. 21) a set of teeth 300 along the ramped surface 288 to retain specific sizes of trimmer lines 24, based on the tooth angle and contact angle with the trimmer line 24. In other constructions, the pawls 280, 282, and their corresponding teeth 300, may be configured to engage trimmer lines 24 of differing sizes, materials, etc.

The axis of rotation 292 is generally off-set (e.g., skewed opposite the ramped surface 288) so that when a length of trimmer line 24 is introduced into the first aperture 272 and fed into the channel 36 in a first direction 304 (e.g., to insert or load the trimmer line 24 into the channel 36) the pawls 280, 282 will automatically pivot outwardly (e.g., toward the release position) and allow the trimmer line 24 to advance through the channel 36. However, if a user and/or external forces (e.g., a centrifugal force) attempt to remove the trimmer line 24 from the channel 36 by moving the trimmer line 24 in a second direction substantially opposite the first 304, the pawls 280, 282 will engage the trimmer line 24 and restrict its removal from the channel 36.

The end caps 286 are fixedly coupled to the top and bottom ends of the pawls 280, 282. In the illustrated construction, each end cap 286 is coupled to a generally square shaped protrusion extending from the pawls 280, 282. However in other constructions, each end cap 286 may be coupled to the end of a corresponding pawl 280, 282 in another manner, for example, by a snap-fit, a press fit, fasteners, adhesives, etc. In yet other constructions, the end caps 286 may be formed as a single piece with the pawls 280, 282.

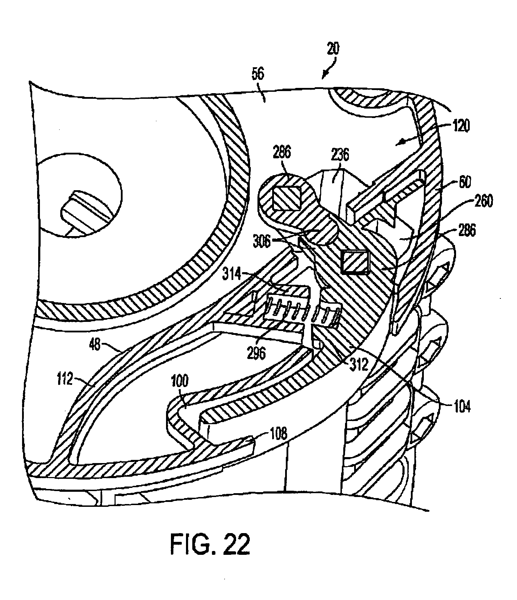

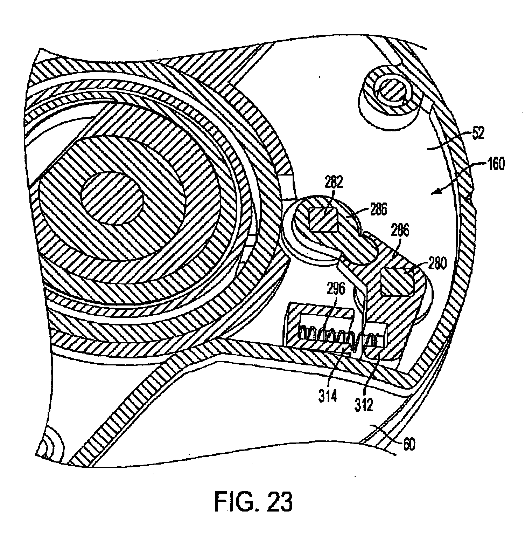

Each end cap 286 includes a gear tooth or teeth 306, to engage a corresponding gear tooth or teeth 306 of an opposing end cap 286 to coordinate the movement of the pawls 280, 282 with respect to one another. In the illustrated construction, an end cap 286 coupled to the top of the first pawl 280 meshes with an end cap 286 coupled to the top of the second pawl 282 (see Fig. 22), such that when the first pawl 280 rotates (e.g., from the engaged position toward the release position), the second pawl 282 rotates (e.g., from the engaged position toward the release position). In the illustrated construction, gear teeth 306 are also provided on the end caps 286 coupled to the bottom of the pawls 280, 282 (see Fig. 23).

As shown in Fig. 21, each end cap 286 also includes a substantially cylindrical projection 308 extending axially outwardly from the pawls 280, 282 and configured to be received within a corresponding pivot boss 124 of the top or bottom plates 48, 52. The cylindrical projection 308 permits each pawl 280, 282 to rotate with respect to the body 28 of the trimmer head 20, while remaining co-axial with the axis of rotation 292.

In the illustrated construction, each clamping mechanism 40 also includes one or more retainers 312 extending from an end cap 286 to receive the end of a biasing member (e.g., a spring 296). Each retainer 312 generally aligns with or corresponds to a stop 314 on the body 28. The springs 296 urge the pawls 280, 282 (through engagement with the end cap 286) toward the engaged position, providing a given amount of clamping force to the trimmer line 24 regardless of whether or not the trimmer head 20 is rotating. In the illustrated construction, the end caps 286 coupled to the top and bottom of the first pawl 280 generally include a retainer 312 (see Figs. 22-23). However, in other constructions, a different number of the end caps 286 may include spring retainers 312 as necessary.

In the illustrated construction, each clamping mechanism 40 also includes a line release button 104 extending from one or more of the end caps 286, and the user operates the button 104 (e.g., pivots the button 104 radially inwardly) to pivot the pawls 280, 282 from the engaged position toward the release position. In other constructions (not shown), the release button 104 may operate in another manner (e.g., axially pivot, axially/radially slide, etc.) to operate the pawls 280, 282.

The illustrated release button 104 may also act as a flyweight, providing additional clamping force to the pawls 280, 282 when the trimmer head 20 is rotating. More specifically, centrifugal forces act on the free end of the release button 104 to urge it radially outwardly (e.g., in a direction opposite to the release position), forcing the pawls 280, 282 toward the engaged position to thereby apply additional clamping force on the trimmer line 24.

In the illustrated construction, the end cap 286 coupled to the top end of the first pawl 280 includes a line release button 104 extending into the notch 100 of the top plate 48. In the illustrated construction, the release button 104 is formed with the end cap 286. In other constructions, the release button 104 may be separate from and drivingly connected to the end cap 286 such that movement of the release button 104 causes movement of the end cap 286.

In other constructions, other end caps 286 may include a line release button. Furthermore, some end caps 286 may include a combination of the release button 104 and the retainer 312 (see Fig. 22).

As shown in Figs. 2-4 and 6-7, the mow ball or wear plate 44 is substantially dome-shaped and includes a flange portion 316 and a cylindrical portion 320 extending axially from the inner diameter 324 of the flange portion 316. Inside the cylindrical portion 320, an inner annular wall 328 extends radially inwardly mid-way between opposite ends of the cylindrical portion and an annular groove 332 is spaced a distance from the inner annular wall 328,

The annular grove 332 is configured to receive a locking ring 336 therein to secure the outer race of a bearing member 340 between the locking ring 336 and the inner annular wall 328 (see Fig. 7). With the outer race secured to the wear plate 44, the inner race of the bearing member 340 may be coupled to the bottom plate 52 (e.g., to the cylindrical core 144) such that the wear plate 44 may rotate independently of the body 28 and the drive shaft.

The flange portion 316 includes an outer surface 344 configured to contact the ground during operation of the trimmer 10. In the illustrated construction, the outer surface 344 is substantially dome-shaped having a slight ridge 348 extending along the perimeter to engage the annular wall 164 if the wear plate 44 undergoes large radial loads. In other constructions, the contour of the flange portion 316 may differ depending upon, for example, the terrain the trimmer 10 may be expected to encounter.

The trimmer head 20 is typically assembled as a unit. The first and second inner body portions 56, 56' are coupled together by introducing the alignment tabs 204, 204' into the corresponding alignment recesses 206, 206'. The first and second outer body portions 60, 60' are coupled (e.g., meshed) to the first and second inner body portions 56, 56', respectively. The second fasteners 228 are introduced into the apertures 248 of the outer body portions 60, 60', fed through the horizontal fastener channels 224 of the inner body portions 56, 56', and retained within the fastener bosses 252, 252' of the opposing outer body portion 60, 60' to fasten the first and second interior body portions 56, 56' with the first and second exterior body portions 60, 60', respectively.

One of the top and bottom plates 48, 52 is coupled with the body portions 56, 56', 60, 60'. The first pawl 280 is inserted into the axial channel 260, aligning the end cap 286 with the appropriate pivot boss 124. The second pawl 282 is inserted into the groove 236, aligning the end cap 286 with the appropriate pivot boss 124 and meshing the teeth 306 of the two end caps 286. The other of the top and bottom plates 48, 52 is coupled with the body portions 56, 56', 60, 60', aligning the remaining end caps 286 with their respective pivot bosses 124. The first fasteners 96 are introduced into the apertures 92 of the upper plate 48, fed through the fastener channels 200, 200' of the inner body portions 56, 56', and threadably retained in the retention bosses 148 of the bottom plate 52 to fasten the upper plate 48, the bottom plate 52, and inner body portions 56, 56' together.

A bearing member 340 is axially introduced into the cylindrical portion 320 of the wear plate 44 until it rests against the inner annular wall 328. A locking ring 336 is positioned within the annular groove 332 to lock the outer race of the bearing member 340 between the annular wall 328 and the locking ring 336. The assembly of the wear plate 44 and bearing member 340 is axially introduced onto the second portion 176 of the cylindrical core 144, and the inner race of the bearing member 340 is secured to the bottom plate 52 with a nut.

To install the trimmer head 20 onto a trimmer, such as the trimmer 10, a distal end of a drive shaft is introduced into the cylindrical sleeve 80 of the upper plate 48 and advanced inwardly until received by the bore of the first portion 172 of the cylindrical core 144, with the recesses of the drive shaft aligned with the flats 184 of the cylindrical core 144. The drive shaft may then be secured to the trimmer head 20 with a fastener, etc. (not shown).

To load a trimmer line 24 into the trimmer head 20, the user selects a channel 36 corresponding to the desired cutting height. A leading end 352 of a trimmer line 24 is introduced into the first aperture 272 of the selected channel 36 and fed into the channel 36 in the first direction 304 until engaging with and pivoting the pawls 280, 282 toward the release position. The trimmer line 24 continues to be fed in the first direction 304 until the leading end 352 emerges from the second aperture 276 of the channel 36 and the cutting end 356 extends from the first aperture 272. In the illustrated construction, more than one trimmer line 24 may be fed into the channels 36 at any one time; typically, one trimmer line 24 is fed into each side of the trimmer head 20 such that a total of two trimmer lines 24 are used on the trimmer head 20.

To remove the trimmer line from its respective channel 36, the release button 104 is operated (e.g., depressed) by the user, thereby pivoting the pawls 280, 282 from the engaged position toward the release position. With the pawls 280, 282 in the release position, the trimmer line 24 is free to move in any direction and, thus, be pulled through either the first or second aperture 272, 276 of the channel 36.

The trimmer line 24 may also be removed from its respective channel 36 by pulling the leading end 352 of the trimmer line 24 in the first direction 304. As described above, the pawls 280, 282 allow the trimmer line 24 to move in the first direction 304 regardless of whether the release button 104 is depressed, and, therefore, the trimmer line 24 can be removed from the second aperture 276 without having to depress the release button 104. The above described method of removal is typically used when the cutting end 356 of the trimmer has been damaged, broken off, fractured, etc., making removal from the first aperture 172 at least difficult.

Thus, the invention may provide, among other things, a trimmer head with a body defining multiple axially-spaced apart channels and a clamping mechanism is operable to retain a trimmer line in more than one axially-spaced apart channel. Also, a trimmer head may include a wear disk pivotable relative to the trimmer head body. In addition, a release button of the clamping mechanism may be arranged on the body to provide additional clamping force when the trimmer head rotates about the axis.

One or more independent features and independent advantages of the invention may be apparent from the following claims:

## Claims

1. A trimmer head (20) for use with a trimmer (10), the trimmer head comprising:
a body (28) rotatable about an axis (32), the body defining one or more channels (36) sized to receive at least a portion of a trimmer line (24) therein; and
a clamping mechanism (40) in operable communication with at least one of the one or more channels to selectively retain the trimmer line within at least one of the one or more channels
wherein the one or more channels includes a first set of axially spaced channels and a second set of axially spaced channels circumferentially spaced from the first set of axially spaced channels; and **characterised in that**
the clamping mechanism is in operable communication with each channel in the first set of axially spaced channels to selectively retain a trimmer line positioned within any one channel in the first set of axially spaced channels.

2. The trimmer head of claim 1, further comprising a wear disk rotatably coupled to the body.

3. The trimmer head of claim 1 or 2, wherein the clamping mechanism includes
a clamping member operable to apply a clamping force to the trimmer line in one of the one or more channels; and
a release button operable to move the clamping member from a clamping position, in which the clamping member applies a clamping force to the trimmer line, toward a release position, in which the clamping force is reduced, the release button being arranged on the body to provide additional clamping force when the trimmer head rotates about the axis.

4. The trimmer head of claim 1, wherein the clamping mechanism includes a first pawl and a second pawl, each pawl being movable into and out of engagement with the trimmer line.

5. The trimmer head of claim 4, wherein each pawl is at least partially positioned within at least two of the one or more channels.

6. The trimmer head of claim 1, wherein the clamping mechanism is a first clamping mechanism, and wherein the trimmer head further comprises a second clamping mechanism in operable communication with each channel in the second set of axially spaced channels to selectively retain the trimmer line positioned within any one channel in the second set of axially spaced channels.

7. The trimmer head of claim 1, wherein the first set of axiallyspaced channels is positioned diametrically opposite the second set ofaxially spaced channels.

8. The trimmer head of claim 1, wherein the channels of the first set of axially spaced channels are axially aligned.

9. The trimmer head of claim 1, wherein each of the one or more channels includes a first opening and a second opening opposite the first opening.

10. The trimmer head of claim 2, wherein the body includes an axial body projection, wherein the wear disk has an outer surface and includes an axial disk projection, the wear disk being coupled to the body with the disk projection radially surrounding the body projection, and wherein the trimmer head further comprises a bearing arrangement between the body projection and the disk projection.

11. The trimmer head of claim 6, wherein the second clamping mechanism includes,
a second clamping member operable to apply a clamping force to the trimmer line within any one channel in the second set of axially spaced channels; and
a second release button operable to move the second clamping member from a clamping position, in which the clamping member applies a clamping force to the trimmer line, toward a release position, in which the clamping force is reduced, the second release button being arranged on the body to provide additional clamping force when the trimmer head rotates about the axis.

12. A trimmer (10) comprising:
a frame (12):
a motor (14) supported by the frame and operable to rotatably drive a drive shaft (16); and
the trimmer head (20) according to claim 1, 2 or 3, the trimmer head supportable on the drive shaft for rotation with the drive shaft.

13. The trimmer of claim 12, wherein the release button is arranged on the body to provide additional clamping force when the trimmer head rotates about the axis.

## Patentansprüche

1. Trimmerkopf (20) zur Verwendung mit einem Trimmer (10), wobei der Trimmerkopf Folgendes umfasst:
einen Korpus (28), der um eine Achse (32) drehbar ist, wobei der Korpus einen oder mehrere Kanäle (36) definiert, die dafür bemessen sind, wenigstens einen Abschnitt einer Trimmerschnur (24) in denselben aufzunehmen, und
einen Klemm-Mechanismus (40) in wirksamer Verbindung mit wenigstens einem von dem einen oder den mehreren Kanälen, um selektiv die Trimmerschnur innerhalb wenigstens eines von dem einen oder den mehreren Kanälen festzuhalten,
wobei der eine oder die mehreren Kanäle einen ersten Satz von mit Zwischenraum in Axialrichtung angeordneten Kanälen und einen zweiten Satz von mit Zwischenraum in Axialrichtung angeordneten Kanälen, der mit Zwischenraum in Umfangsrichtung von dem ersten Satz von mit Zwischenraum in Axialrichtung angeordneten Kanälen angeordnet ist, einschließen, und **dadurch gekennzeichnet, dass**
der Klemm-Mechanismus in wirksamer Verbindung mit jedem Kanal in dem ersten Satz von mit Zwischenraum in Axialrichtung angeordneten Kanälen steht, um selektiv eine Trimmerschnur festzuhalten, die innerhalb eines beliebigen Kanals in dem ersten Satz von mit Zwischenraum in Axialrichtung angeordneten Kanälen angeordnet ist.

2. Trimmerkopf nach Anspruch 1, der ferner eine Verschleißscheibe umfasst, die drehbar an den Korpus gekoppelt ist.

3. Trimmerkopf nach Anspruch 1 oder 2, wobei der Klemm-Mechanismus Folgendes einschließt:
ein Klemmelement, das funktionsfähig ist, um eine Klemmkraft auf die Trimmerschnur in einem von dem einen oder den mehreren Kanälen auszuüben, und
einen Freigabeknopf, der funktionsfähig ist, um das Klemmelement von einer Klemmstellung, in der das Klemmelement eine Klemmkraft auf die Trimmerschnur ausübt, zu einer Freigabestellung hin zu bewegen, in der die Klemmkraft verringert wird, wobei der Freigabeknopf an dem Korpus angeordnet ist, um eine zusätzliche Klemmkraft auszuüben, wenn sich der Trimmerkopf um die Achse dreht.

4. Trimmerkopf nach Anspruch 1, wobei der Klemm-Mechanismus eine erste Sperrklinke und eine zweite Sperrklinke einschließt, wobei jede Sperrklinke in und außer Eingriff mit der Trimmerschnur bewegt werden kann.

5. Trimmerkopf nach Anspruch 4, wobei jede Sperrklinke wenigstens teilweise innerhalb von wenigstens zwei von dem einen oder den mehreren Kanälen angeordnet ist.

6. Trimmerkopf nach Anspruch 1, wobei der Klemm-Mechanismus ein erster Klemm-Mechanismus ist und wobei der Trimmerkopf ferner einen zweiten Klemm-Mechanismus in wirksamer Verbindung mit jedem Kanal in dem zweiten Satz von mit Zwischenraum in Axialrichtung angeordneten Kanälen umfasst, um selektiv die Trimmerschnur festzuhalten, die innerhalb eines beliebigen Kanals in dem zweiten Satz von mit Zwischenraum in Axialrichtung angeordneten Kanälen angeordnet ist.

7. Trimmerkopf nach Anspruch 1, wobei der erste Satz von mit Zwischenraum in Axialrichtung angeordneten Kanälen diametral gegenüber dem zweiten Satz von mit Zwischenraum in Axialrichtung angeordneten Kanälen angeordnet ist.

8. Trimmerkopf nach Anspruch 1, wobei die Kanäle des ersten Satzes von mit Zwischenraum in Axialrichtung angeordneten Kanälen in Axialrichtung ausgerichtet sind.

9. Trimmerkopf nach Anspruch 1, wobei jeder von dem einen oder den mehreren Kanälen eine erste Öffnung und eine zweite Öffnung gegenüber der ersten Öffnung einschließt.

10. Trimmerkopf nach Anspruch 2, wobei der Korpus einen axialen Korpusvorsprung einschließt, wobei die Verschleißscheibe eine Außenfläche hat und einen axialen Scheibenvorsprung einschließt, wobei die Verschleißscheibe an den Korpus gekoppelt ist, wobei der Scheibenvorsprung den Korpusvorsprung in Radialrichtung umschließt, und wobei der Trimmerkopf ferner eine Lageranordnung zwischen dem Korpusvorsprung und dem Scheibenvorsprung umfasst.

11. Trimmerkopf nach Anspruch 6, wobei der zweite Klemm-Mechanismus Folgendes einschließt:
ein zweites Klemmelement, das funktionsfähig ist, um eine Klemmkraft auf die Trimmerschnur innerhalb eines beliebigen Kanals in dem zweiten Satz von mit Zwischenraum in Axialrichtung angeordneten Kanälen auszuüben, und
einen zweiten Freigabeknopf, der funktionsfähig ist, um das zweite Klemmelement von einer Klemmstellung, in der das Klemmelement eine Klemmkraft auf die Trimmerschnur ausübt, zu einer Freigabestellung hin zu bewegen, in der die Klemmkraft verringert wird, wobei der zweite Freigabeknopf an dem Korpus angeordnet ist, um eine zusätzliche Klemmkraft auszuüben, wenn sich der Trimmerkopf um die Achse dreht.

12. Trimmer (10), der Folgendes umfasst:
einen Rahmen (12),
einen Motor (14), der durch den Rahmen getragen wird und funktionsfähig ist, um eine Antriebswelle (16) anzutreiben, und
den Trimmerkopf (20) nach Anspruch 1, 2 oder 3, wobei der Trimmerkopf auf der Antriebswelle für eine Drehung mit der Antriebswelle getragen werden kann.

13. Trimmer nach Anspruch 12, wobei der Freigabeknopf an dem Korpus angeordnet ist, um eine zusätzliche Klemmkraft auszuüben, wenn sich der Trimmerkopf um die Achse dreht.

## Revendications

1. Tête de coupe (20) destinée à être utilisée avec une tondeuse (10), la tête de coupe comprenant :
un corps (28), pouvant tourner sur un axe (32), le corps définissant un ou plusieurs canaux (36) dimensionnés de sorte à recevoir au moins une partie d'un fil de coupe (24) ; et
un mécanisme de serrage (40), communiquant en service avec au moins un dudit un ou des plusieurs canaux pour retenir de manière sélective le fil de coupe dans au moins un de l'un ou des plusieurs canaux ;
dans lequel ledit un ou les plusieurs canaux englobe un premier groupe de canaux à espacement axial et un deuxième groupe de canaux à espacement axial, espacé circonférentiellement du premier groupe de canaux à espacement axial ; et **caractérisée en ce que**
le mécanisme de serrage communique en service avec chaque canal dans la premier groupe de canaux à espacement axial pour retenir de manière sélective un fil de coupe positionné dans un quelconque canal dans le premier groupe de canaux à espacement axial.

2. Tête de coupe selon la revendication 1, comprenant en outre un disque d'usure accouplé de manière rotative au corps.

3. Tête de coupe selon les revendications 1 ou 2, dans laquelle le mécanisme de serrage englobe :
un élément de serrage, servant à appliquer une force de serrage au fil de coupe dans un dudit un ou des plusieurs canaux ; et
un bouton de libération destiné à déplacer l'élément de serrage d'une position de serrage, dans laquelle l'élément de serrage applique une force de serrage au fil de coupe, vers une position de libération, dans laquelle la force de serrage est réduite, le bouton de libération étant agencé sur le corps de sorte à fournir une force de serrage additionnelle lorsque la tête de coupe tourne sur l'axe.

4. Tête de coupe selon la revendication 1, dans laquelle le mécanisme de serrage englobe un premier cliquet et un deuxième cliquet, chaque cliquet pouvant être déplacé en vue de son engagement dans le fil de coupe et de son dégagement de celui-ci.

5. Tête de coupe selon la revendication 4, dans laquelle chaque cliquet est au moins en partie positionné dans au moins deux dudit un ou des plusieurs canaux.

6. Tête de coupe selon la revendication 1, dans laquelle le mécanisme de serrage est un premier mécanisme de serrage, la tête de coupe comprenant en outre un deuxième mécanisme de serrage, communiquant en service avec chaque canal dans le deuxième groupe de canaux à espacement axial, pour retenir de manière sélective le fil de coupe positionné dans un quelconque canal dans le deuxième groupe de canaux à espacement axial.

7. Tête de coupe selon la revendication 1, dans laquelle le premier groupe de canaux à espacement axial est positionné en un point diamétralement opposé au deuxième groupe de canaux à espacement axial.

8. Tête de coupe selon la revendication 1, dans laquelle les canaux du premier groupe de canaux à espacement axial sont alignés axialement.

9. Tête de coupe selon la revendication 1, dans laquelle chacun dudit un ou des plusieurs canaux englobe une première ouverture et une deuxième ouverture opposée à la première ouverture.

10. Tête de coupe selon la revendication 2, dans laquelle le corps englobe une saillie de corps axiale, le disque d'usure comportant une surface externe et englobant une saillie de disque axiale, le disque d'usure étant accouplé au corps, la saillie du disque entourant radialement la saillie du corps, et la tête de coupe comprenant en outre un assemblage de support entre la saillie du corps et la saillie du disque.

11. Tête de coupe selon la revendication 6, dans laquelle le deuxième mécanisme de serrage englobe :
un deuxième élément de serrage, destiné à appliquer une force de serrage au fil de coupe dans un quelconque canal dans le deuxième groupe de canaux à espacement axial ; et
un deuxième bouton de libération, destiné à déplacer le deuxième élément de serrage d'une position de serrage, dans laquelle l'élément de serrage applique une force de serrage au fil de coupe, vers une position de libération, dans laquelle la force de serrage est réduite, le deuxième bouton de libération étant agencé sur le corps de sorte à fournir une force de serrage additionnelle lorsque la tête de coupe tourne sur l'axe.

12. Tondeuse (10), comprenant :
un châssis (12) ;
un moteur (14) supporté par le châssis et destiné à entraîner de manière rotative un arbre d'entraînement (16) ; et
la tête de coupe (20) selon les revendications 1, 2 ou 3, la tête de coupe pouvant être supportée sur l'arbre d'entraînent en vue d'une rotation avec l'arbre d'entrainement.

13. Tondeuse selon la revendication 12, dans laquelle le bouton de libération est agencé sur le corps de sorte à fournir une force de serrage additionnelle lorsque la tête de coupe tourne sur l'axe.
